(19) Europäisches Patentamt
European Patent Office
Office européen des brevets

(11) Numéro de publication: **0 149 370 B1**

(12) **FASCICULE DE BREVET EUROPEEN**

(45) Date de publication du fascicule du brevet:
**17.11.88**

(51) Int. Cl.⁴: **B 08 B 9/04**, G 01 M 3/00

(21) Numéro de dépôt: **84401897.8**

(22) Date de dépôt: **21.09.84**

(54) **Appareil à déplacement autonome pour sa progression à l'intérieur de canalisation, notamment pour son exploration et/ou son traitement, et/ou son tubage à distance.**

(30) Priorité: **23.09.83 FR 8315163**

(43) Date de publication de la demande:
**24.07.85 Bulletin 85/30**

(45) Mention de la délivrance du brevet:
**17.11.88 Bulletin 88/46**

(84) Etats contractants désignés:
**AT BE CH DE GB IT LI LU NL SE**

(56) Documents cités:
**EP - A - 0 074 147**
**FR - A - 2 491 785**

(73) Titulaire: **GAZ DE FRANCE, 23, rue Philibert Delorme, F-75017 Paris (FR)**
Titulaire: **Rouland, Daniel, 11-13 rue des Capucins, F-76000 Rouen (FR)**

(72) Inventeur: **Fournot, Bernard, 25bis route des Roches Orival, F-76500 Elbeuf (FR)**
Inventeur: **Le Bozec, François, 5 impasse du Colombier Belbeuf, F-76240 Le Mesnil Esnard (FR)**

(74) Mandataire: **Portal, Gérard et al, Cabinet Z. Weinstein 20, Avenue de Friedland, F-75008 Paris (FR)**

## Description

La présente invention concerne essentiellement un appareil à déplacement autonome pour sa progression à l'intérieur de canalisation, notamment pour son exploration et/ou son traitement, et/ou son tubage à distance selon le préambule de la revendication 1.

On connaît déjà divers appareils à déplacement autonome ou autopropulsés, pour l'exploration intérieure de canalisations et/ou leur traitement à distance.

Par exemple, le document FR-A-1 583 501 décrit un chariot autopropulsé capable de tracter une remorque à l'intérieur d'une canalisation en vue de prendre des clichés radiographiques des soudures circulaires de raboutage des tubes entre eux. Ce chariot comprend un dispositif de propulsion avec roues motrices montées au sommet d'un pentographe articulé.

Un tel type de chariot autopropulsé ne peut être utilisé que dans des canalisations de diamètre important, car il se prête mal à une miniaturisation. D'autre part, il ne peut en général pénétrer que dans des canalisations relativement propres. Par exemple, si la paroi de la canalisation comporte des dépôts divers visqueux ou collants, comme par exemple du goudron, ce chariot autopropulsé, de par sa conception, n'est pas capable de progresser dans la canalisation, notamment par manque de force de traction.

Par ailleurs, le document FR-A-2 491 785 décrit un élément de déplacement dans un conduit constitué par un vérin susceptible d'actionner deux éléments bloqueurs à lames-ressort dont la courbure peut varier pour provoquer le blocage ou le déblocage de ces éléments.

Toutefois, l'élément de déplacement et les éléments bloqueurs constituent en réalité un seul véhicule de longueur notable, ce qui le rend peu apte à franchir les courbes du conduit à traiter. En outre, les lames-ressort des éléments bloqueurs ne se prêtent pas à un blocage efficace contre la paroi interne du conduit.

En résumé de ce qui précède, l'art antérieur dans ce domaine technique concerne essentiellement des appareils autopropulsés ou à déplacement autonome pour leur progression à l'intérieur de canalisation, notamment pour leur exploration et/ou leur traitement à distance dans le cas où ces canalisations sont parfaitement propres, sans corps étrangers solides et ne comportent pas de courbes accentuées.

Or, les canalisations sont souvent polluées et comportent des corps étrangers solides, notamment des produits collants comme par exemple le goudron, ce qui nécessite des forces de traction importantes que les chariots acutellement connus ne peuvent pas développer. D'autre part, les appareils de l'art antérieur sont tous d'une conception compliquée rendant pratiquement impossible une miniaturisation importante, ce qui interdit leur application dans des canalisations de faible diamètre et à courbes accentuées.

La présente invention a donc pour objet la réalisation d'un appareil à déplacement autonome pour sa progression à l'intérieur d'une canalisation, notamment pour son exploration, son traitement ou son tubage à distance, d'une conception très simple, d'une force de traction et de blocage importantes et pouvant être adapté à volonté en fonction du type de canalisation à explorer, traiter ou tuber. En outre, un autre objet de l'invention est de fournir un appareil à déplacement autonome facilement miniaturisable de manière à être utilisable non seulement dans des canalisations de grand diamètre, mais également dans des canalisations de faible diamètre comme par exemple un diamètre compris entre 0,20 mètre et 0,25 mètre, des diamètres plus petits pouvant être envisagés sans problème.

Ainsi, la présente invention a pour objet un appareil à déplacement autonome dans une canalisation, permettant notamment l'exploration et/ou le traitement à distance de cette canalisation, et du type comprenant une pluralité d'éléments attelés entre eux pour former un train apte à franchir les courbes et dont chaque élément a une fonction précise, au moins un des éléments formant un élément de déplacement du train, et au moins un autre desdits éléments formant un élément de commande de l'élément de déplacement, caractérisé en ce que l'élément de déplacement, fonctionnant par tractage ou poussage, est constitué par un vérin comprenant un corps relié à un élément bloqueur et un piston relié à un autre élément bloqueur, au moins l'un des deux éléments bloqueurs, disposés respectivement en amont et en aval de l'élément de déplacement et actionnés de façon alternative par l'élément de commande, comprenant un corps muni à sa périphérie de plusieurs bras rigides de longueur réglable et à mouvement indépendant, lesquels bras sont montés articulés par une extrémité sur le corps et comportent à leur extrémité libre des patins de blocage, de manière à être déplaçables entre une position repliée de repos sensiblement parallèle au corps de l'élément bloqueur et une position déployée de blocage pour laquelle les patins de blocage prennent appui sélectivement contre la paroi interne de la canalisation pour pouvoir résister à des efforts de traction élevés.

Chaque élément bloqueur peut être réalisé sous diverses formes qui seront explicitées plus loin et dont chacune fait partie intégrante de l'invention.

D'autre part, et selon une autre caractéristique avantageuse de l'invention, les éléments sont attelés entre eux par des articulations souples ou élingues, réalisées par exemple avec du câble d'acier en filins torsadés, chaque élingue étant pourvue de manchons sertis par emboutissage pénétrant dans des logements prévus dans les éléments à assembler. Avantageusement, l'appareil selon l'invention comprend des moyens formant appui de glissage et de centrage qui sont de préférence supportés par les articulations souples.

On peut donc constater de ce qui précède que grâce à la réalisation de l'appareil selon l'invention sous forme d'une pluralité d'éléments attelés entre eux de manière à former un train dont chaque élément constitue un wagon indépendant des autres éléments, interchangeable à volonté, l'appareil selon l'invention n'est plus compact mais est développé selon l'axe de la canalisation et peut donc être réalisé d'une faible envergure, c'est-à-dire qu'il est facilement miniaturisable et peut être utilisé dans des canalisations de faible diamètre.

D'autre part, l'avantage considérable de l'interchangeabilité des éléments fait que lorsqu'on désire par exemple une force de traction plus élevée, il suffit de remplacer l'élément de déplacement par un élément de déplacement développant une plus grande force de traction.

D'autre part, le mode d'articulation ou d'attelage des éléments entre eux, selon l'invention, par des articulations souples ou élingues, permet de franchir des courbes ce qui constitue un avantage technique considérable et particulièrement inattendu pour un tel type d'appareil.

Ainsi, l'appareil selon l'invention est utilisable en milieu fortement pollué, pouvant comporter des corps étrangers solides ainsi que des dépôts visqueux ou collants comme par exemple du goudron, grâce à sa grande force de traction. Cette grande force de traction permet également de tracter sans difficulté tout type d'appareil d'exploration et/ou de traitement ainsi que des tubes pour réaliser des tubages.

D'autres buts, caractéristiques et avantages de l'invention apparaîtront plus clairement à la lumière de la description explicative qui va suivre faite en référence aux dessins annexés représentant plusieurs modes de réalisation de l'invention actuellement préférés, donnés simplement à titre d'exemple et qui ne sauraient en aucune façon limiter la portée de l'invention. Dans les dessins:

la figure 1 représente schématiquement les éléments essentiels de l'appareil à déplacement autonome selon l'invention, à l'intérieur d'une canalisation;

la figure 2 représente en perspective un premier mode de réalisation d'un élément bloqueur, qui est ici l'élément bloqueur aval de l'appareil selon l'invention, fig. 1;

la figure 3 représente également en perspective un deuxième mode de réalisation d'un élément bloqueur, qui est ici l'élément bloqueur amont de l'appareil selon l'invention représenté à la figure 1;

la figure 4 représente en coupe partielle un troisième mode de réalisation d'un élément bloqueur selon l'invention;

la figure 5 représente une vue de détail du piston du vérin d'étirage de l'élément bloqueur représenté à la figure 4;

la figure 6 représente en perspective l'élément tracteur-pousseur, qui est ici formé par un vérin;

la figure 7 représente une vue en élévation des moyens formant appui de glissage et de centrage selon l'invention, représenté à la figure 1;

la figure 7a représente une vue de face des moyens d'appui et de centrage de la figure 7;

la figure 8 représente un autre mode de réalisation des moyens d'appui et de centrage selon l'invention;

la figure 9 est une vue schématique en perspective du mode de raccordement des alimentations à l'appareil selon l'invention;

la figure 10 représente une vue schématique d'éléments complémentaires de l'appareil à déplacement autonome selon l'invention, attelés à la suite des éléments principaux de la figure 1, de manière à former un appareil à force de traction plus importante, et

les figures 11 et 12 représentent des vues simplifiées du système d'articulation des bras de l'élément bloqueur représenté à la figure 2, en position baissée ou repliée (fig. 11) et levée ou déployée (fig. 12).

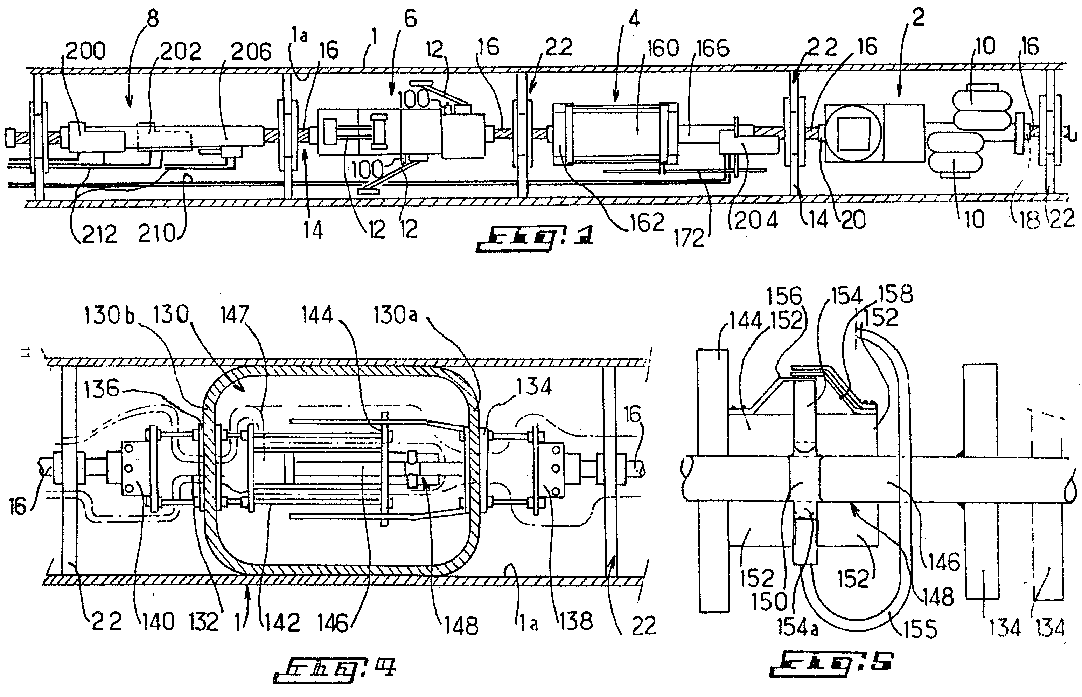

En référence à la figure 1, un appareil à déplacement autonome selon l'invention, pour sa progression à l'intérieur d'une canalisation 1, notamment pour son tubage, son exploration et/ou son traitement à distance est caractérisé en ce qu'il comprend une pluralité d'éléments 2, 4, 6, 8, attelés entre eux de manière à former un train dont chaque élément constitue un wagon indépendant des autres éléments, interchangeable à volonté; chaque élément ayant une fonction précise et étant de longueur adaptée aux courbes à franchir. Au moins l'un des éléments 2, 4, 6, 8 forme un élément de déplacement proprement dit (ici élément 4).

Avantageusement, au moins un autre desdits éléments 2, 4, 6, 8 forme un élément de commande (ici l'élément 8) de l'élément de déplacement 4.

Selon une caractéristique de l'invention, l'élément de déplacement 4 est un élément de déplacement par tractage ou poussage, dit élément tracteur-pousseur.

Selon une autre caractéristique de l'invention, au moins un élément (ici les deux éléments 2, 6) est un élément bloqueur comprenant des moyens de blocage 10 pour l'élément 2 et 12 pour l'élément 6, venant prendre appui sélectivement contre la paroie interne 1a de la canalisation 1 de manière à pouvoir résister à des efforts de traction élevés.

Selon un mode de réalisation préféré, comme représenté, l'élément tracteur-pousseur 4 formant l'élément de déplacement est disposé entre deux éléments bloqueurs respectivement amont 2 et aval 6, actionnés de façon alternée par l'élément de commande 8.

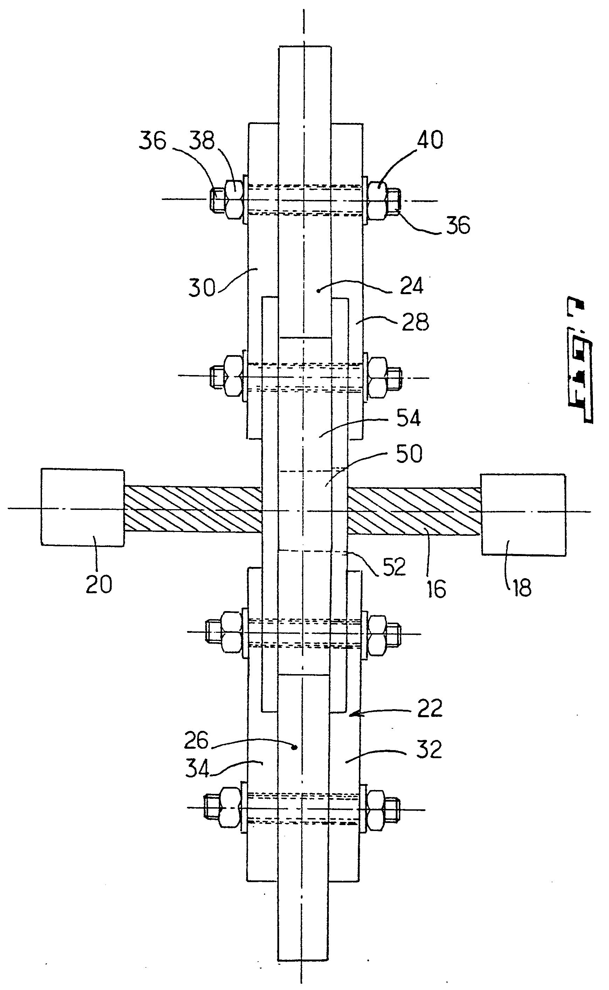

Selon un mode de réalisation particulièrement avantageux de l'invention, les éléments (2, 4, 6, 8) sont attelés entre eux par des articulations souples 14 ou élingues réalisées par exemple avec du câble notamment d'acier en filins torsadés, de longueur appropriée. Chaque élingue constituant l'articulation 14 est pourvue à ses extrémités de manchons, tels que 18, 20 pour l'articulation entre les éléments 2, 4, sertis par emboutissage et pénétrant dans des logements prévus dans les éléments à assembler ou atteler. Cette articulation 14 est plus précisément représentée à la figure 7.

Selon un autre mode de réalisation avantageux, l'appareil selon l'invention comprend des moyens 22 formant appui de glissage et de centrage (dont un mode de réalisation est représenté à la figure 1 et montré plus en détail aux figures 7 et 7a). De préférence, ces moyens 22 formant appui de glissage et de centrage sont supportés par les articulations souples 14 pour permettre de réaliser effectivement cette fonction d'appui de glissage et de centrage, l'envergure ou l'empattement de ces moyens 22 est pratiquement égal ou légèrement inférieur au diamètre de la canalisation 1 à explorer et/ou traiter, et/ou tuber.

En référence au mode de réalisation représenté aux figures 7 et 7a, les moyens 22 formant appui de glissage et de centrage comprennent avantageusement deux demi-coupelles 24, 26, par exemple en élastomère ou en caoutchouc, serrées entre deux flasques respectivement 28, 30 pour la coupelle 24 et 32, 34 pour la coupelle 26, lesdits flasques étant avantageusement ouvrants en étant simplement réunis par des systèmes de goujons et d'écrou tels que 36, 38, 40. Chaque coupelle 24, 26 comporte de préférence des échancrures, telles que 42, 44; 46, 48 respectivement permettant de laisser passer des corps étrangers non fixés (voir figure 7a).

D'autre part, ces moyens 22 formant appui de glissage et de centrage sont supportés par l'articulation souple 14 par l'intermédiaire d'un manchon 50 serti sur l'élingue 16 entre les manchons d'extrémité 18 et 20, ledit manchon 50 pénétrant dans un logement 52 réalisé dans une pièce centrale 54 en forme sensiblement de disque sur lequel sont fixées les extrémités inférieures des flasques 28, 30, 32, 34, de manière amovible, par le même système de goujons et d'écrous que pour les demi-coupelles 24, 26, précédemment décrit.

Une autre variante de réalisation des moyens 22 formant appui de glissage et de centrage est représentée à la figure 8.

Selon ce deuxième mode de réalisation, ces moyens 22 sont formés par un système de traîneau 60 de forme sensiblement tubulaire et comprenant un tube 62 proprement dit pourvu à ses extrémités de flasques 64, 66 comportant des manchons 68, 70 sertis sur l'élingue 16. Des bandes 72 ou lamelles de glissement et centrage proprement dit sont fixées sur les manchons 68, 70 en prenant appui extérieurement sur les flasques 66 ou 64. Ces bandes ou lamelles 72 peuvent également être fixées directement sur la face tournée vers l'élingue 16 des flasques au lieu d'être fixées sur les manchons 68, 70. Chaque flasque peut être monobloc ou formé d'une association de plusieurs pièces comme représenté à la figure 8, les flasques pouvant être réalisés sous des formes diverses. L'empattement du traîneau 60 est naturellement prévu pour être sensiblement égal ou légèrement inférieur au diamètre de la canalisation 1 à explorer et/ou traiter.

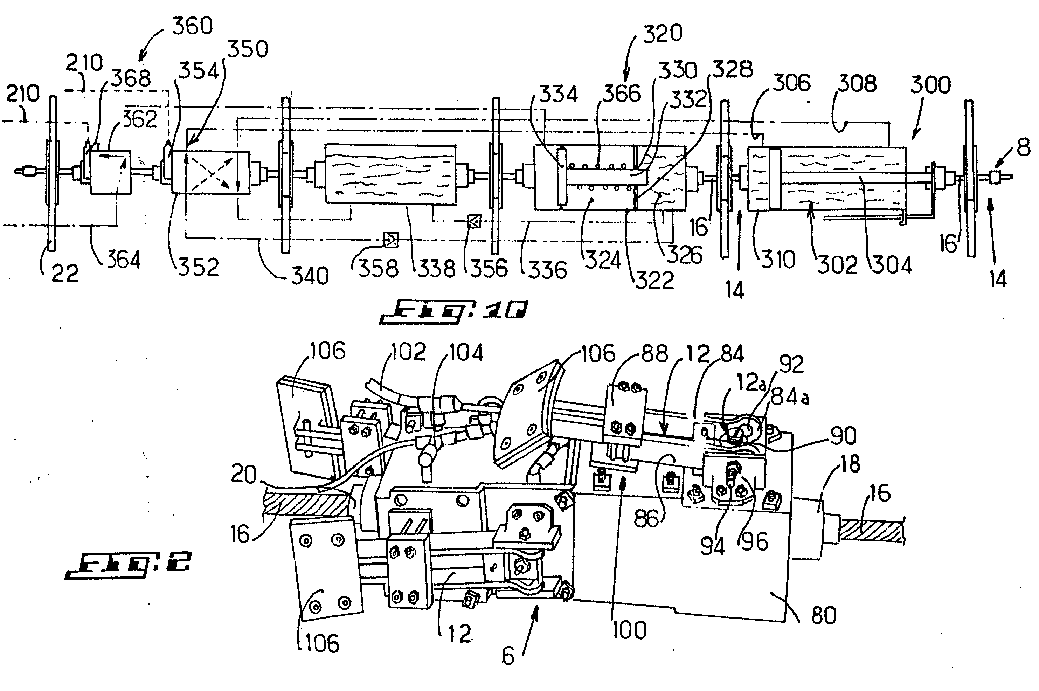

En référence à la figure 2, on a représenté un premier mode de réalisation d'un élément bloqueur, qui, selon l'appareil représenté à la figure 1, est l'élément bloqueur aval 6 mais qui peut également constituer l'élément bloqueur amont 2.

Selon ce premier mode de réalisation, cet élément bloqueur 6 comprend un corps 80 relié à l'élingue 16 par le même système de manchons 18, 20, sertis sur l'élingue et pénétrant dans des logements correspondants prévus dans le corps 80. Le corps 80 est ici pourvu à sa périphérie de plusieurs bras rigides 12, ici quatre, avantageusement de longueur réglable, en étant prévus téléscopiques, et à mouvement indépendant. Ces bras 12 sont montés articulés à une extrémité 12a relativement au corps 80, le détail de l'articulation étant représenté à la figure 11, de manière simplifiée. On peut constater à ce sujet que chaque bras est formé en pratique de deux barres parallèles 84, 86 réunies ensemble par des entretoises 88, 90. L'extrémité d'articulation 84a, 86a de chaque barre comporte une lumière telle que la lumière 92 clairement visible aux figures 2 et 11, au travers de laquelle passe un arbre 94 monté sur un palier 96. La coopération de la lumière 92 et de l'arbre 94 permet de définir l'angle de déploiement des bras 12 et de bloquer ces bras en position déployée ou repliée. En outre, l'entretoise 90 située près des extrémités 84a; 86a des barres 84, 86 comporte un axe d'articulation proprement dit 98 disposé entre l'arbre 94 de guidage de course des bras 12 et l'extrémité libre des bras 12. Le déploiement des bras 12 depuis une position repliée de repos sensiblement parallèle au corps 80 est obtenu à l'aide de vérins rigides 100 de faible course qui sont de préférence des vérins pneumatiques, par pivotement des bras 12 dans le plan perpendiculaire à l'axe de la canalisation. On voit bien les conduits d'alimentation en air comprimé tels que 102, 104 à la figure 2. Les bras 12 sont représentés décalés de 90° les uns par rapport aux autres pour un blocage symétrique.

Enfin, l'extrémité libre des bras 12 est pourvue de patins de blocage 106 qui sont de préférence réalisés en élastomère ou en caoutchouc.

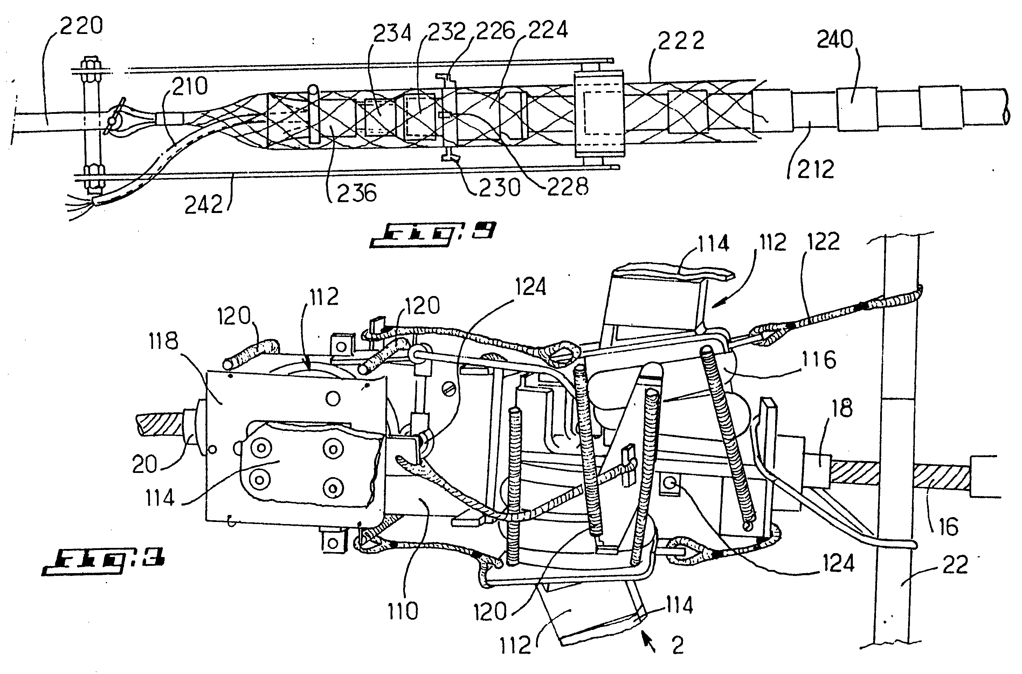

En référence à la figure 3, on a représenté un deuxième mode de réalisation d'élément bloqueur qui, selon l'appareil de la figure 1, constitue par exemple l'élément bloqueur amont 2 mais peut très bien également former l'élément bloqueur aval.

Cet élément bloqueur 2 comprend également un corps 110 également raccordé à l'élingue 16 par des manchons 18, 20 de manière identique aux autres éléments, comme précédemment décrit. Le corps 110 est pourvu à sa périphérie d'une pluralité de vérins souples 112 en général au nombre de quatre, et décalés les uns par rapport aux autres de 90°, indépendants, radialement saillants en direction de la paroi interne 1a de la canalisation et dont l'extrémité libre est aussi pourvue de moyens de blocage 114 constitués par des patins, de préférence en élastomère ou caoutchouc.

De préférence, ces vérins sont des vérins pneumatiques qui dans le mode de réalisation représenté sont formés par des boudins 116 gonflables. Dans ce cas, afin de maintenir l'extrémité supérieure ou tête du vérin 112 décalée par rapport à sa base, on prévoit des haubans 118 comportant des moyens de rappel élastiques 120 par exemple des ressorts pour affaisser le vérin 112 lors d'un dégonflage, ainsi que des raidisseurs 112 reliés soit au corps 110 soit encore aux moyens formant appui de glissage et de centrage 22. Dans l'exemple représenté, les conduits d'arrivée d'air comprimé sont représentés avec le numéro de référence 124. On peut utiliser un autre fluide que l'air.

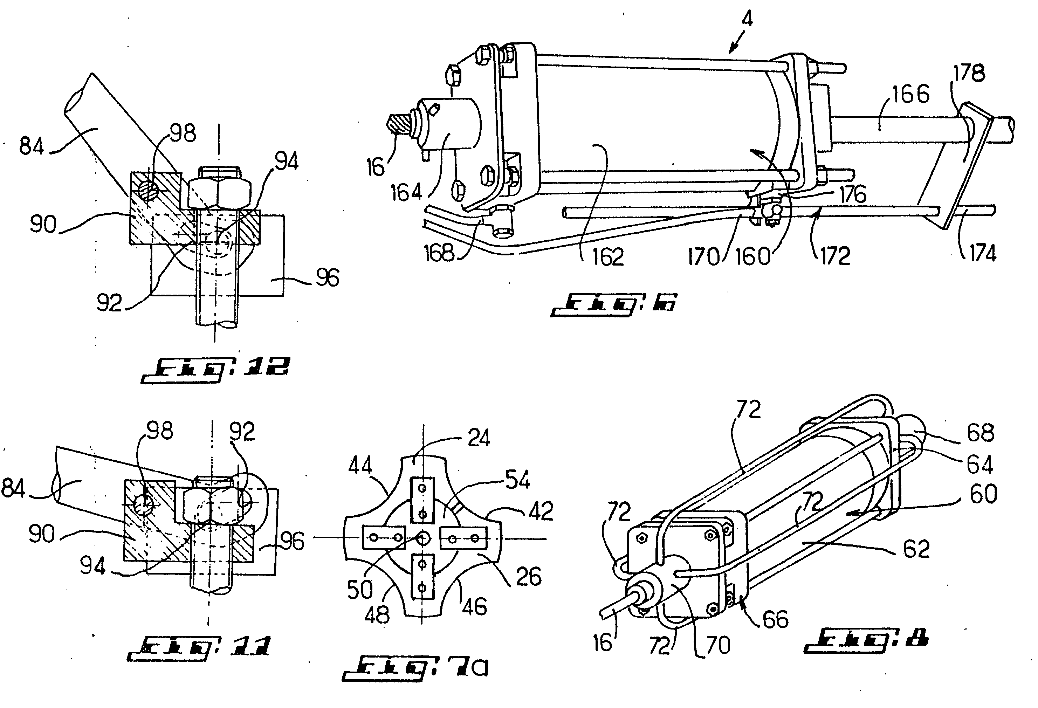

En référence à la figure 4, on a représenté un troisième mode de réalisation d'éléments bloqueurs pouvant constituer l'élément bloqueur 2 et/ou l'élément bloqueur 6 de l'appareil représenté à la figure 1. Selon ce mode de réalisation, l'élément bloqueur comprend un ballon gonflable 130, et généralement en caoutchouc, qui à l'état non gonflé présente un diamètre externe inférieur au diamètre interne de la canalisation 1 et à l'état gonflé, comme représenté à la figure 4, vient en contact direct avec la paroi interne 1a de la canalisation 1. De préférence, le gonflage du ballon 130 est obtenu par injection d'air comprimé par un conduit d'alimentation 132 passant au travers des moyens 22 formant appui de glissage et de centrage, comme on le voit bien à la figure 4. De même, tous les conduits d'alimentation passent au travers des moyens 22 pour aller d'un élément à l'autre depuis l'élément de commande 8 qui sera décrit plus loin.

Suivant ce troisième mode de réalisation d'élément bloqueur, le ballon 130 est pourvu à ses parois avant 130a et arrière 130b de moyens 134, 136 de solidarisation avec l'élingue 16, par exemple formés par des flasques que l'on voit bien à la figure 4 situés de part et d'autre de la paroi 130a, 130b et solidaires de manchons 138, 140 sertis sur l'élingue 16.

Selon une caractéristique préférée de ce troisième mode de réalisation d'élément bloqueur, le ballon gonflable 130 est pourvu à l'intérieur d'un vérin rigide 142 d'étirage du ballon 130, dont le corps 144 de vérin est solidaire de la paroi avant ou arrière (comme représenté) du ballon 130 et dont le piston 146 de vérin est relié ou solidaire de la paroi arrière ou avant (comme représenté), respectivement, du ballon 130, de manière à étirer axialement le ballon en diminuant ainsi son diamètre.

Avantageusement, ce vérin est un vérin pneumatique alimenté en air comprimé par le conduit 147. Pour éviter une déformation axiale du ballon 130 lors de son gonflage, on prévoit un dispositif 148 de verrouillage du piston 146 du vérin 142 que l'on voit plus en détail à la figure 5. Ce dispositif 148 de verrouillage comprend une ouverture 150 traversante, fermée de manière étanche par la présence d'éléments d'étanchéité 152 coopérant avec un verrou 154 en forme de piston. Ce verrou 154 est susceptible de coulisser entre une position verrouillée pour laquelle il occupe toute l'ouverture 154 et fait saillie de part et d'autre du piston 146 entre les éléments 152 (position 154a) et une position déverrouillée (telle que représentée) pour laquelle le piston 146 peut coulisser librement et étirer axialement le ballon 130.

Le déverrouillage du verrou 154 est obtenu par envoi d'air comprimé par le conduit 155. La course du verrou 154 est limitée par un système amortisseur 156 coopérant avec une butée 158, comme clairement visible à la figure 5.

En référence à la figure 6, représentant l'élément de déplacement tracteur ou pousseur 4, celui-ci est constitué selon l'exemple représenté par un vérin 160, double effet, comprenant un corps 162 relié à une partie des éléments attelés par le système de manchons 164, comme décrit précédemment, sertis sur l'élingue 16, au moins l'un de ces éléments attelés étant un élément bloqueur, ici l'élément bloqueur 6; et un piston 166 de vérin relié à la partie restante des éléments attelés dont au moins l'un d'entre eux est un élément bloqueur, ici l'élément bloqueur 2 (figure 1).

De préférence, ce vérin est un vérin pneumatique et on a représenté en 168 et 170 les conduits d'alimentation en air comprimé. Cependant, ce vérin peut également être un vérin hydraulique.

Selon une caractéristique préférée de réalisation de cet élément de déplacement 4 tracteur ou pousseur, celui-ci est pourvu d'un système anti-giratoire 172 formé par une tige-guide 174 fixée en 176 sur le corps 162 du vérin, montée parallèle et décalée vers l'extérieur relativement au piston 166 du vérin et comportant vers son extrémité libre, un élément 178 de liaison entre le piston 166 de vérin et la tige-guide 174, permettant le coulissement libre du piston 166 de vérin.

Enfin, en référence à la figure 1, on voit que l'élément de commande 8 est de préférence le dernier élément et comprend des moyens 200, 202, 204 d'actionnement indépendamment de chaque autre élément; lesdits moyens d'actionnement 200, 202, 204, indépendamment de chaque autre élément, sont de préférence prévus pour recevoir des ordres d'actionnement transmis par un câble électrique 210 relié à une centrale de commande (non représentée), de préférence disposée à l'extérieur de la canalisation 1. Selon le mode de réalisation représenté, où les moyens 200, 202, 204 sont des distributeurs en air comprimé de chaque élément 6, 4, 2 respectivement, commandés électriquement, on prévoit un dispositif de sécurité de fonctionnement 206 formé par un présostat, monté en parallèle aux moyens 200, 202, 204, et qui actionne un relais électrique lorsqu'on atteint la pression pneumatique requise. Ce relais électrique donne un «feut vert» à la centrale de commande qui à son tour transmet l'ordre d'actionnement adéquat par le câble électrique 210.

On notera que dans l'exemple représenté à la figure 1, le moyen d'actionnement 204 n'est pas disposé sur l'élément de commande 8 mais sur l'élément de déplacement 4 pour distribuer l'air comprimé près de l'élément bloqueur 2. Il pourrait cependant être disposé sur l'élément bloqueur 2 ou même sur l'élément de commande 8.

De préférence, le câble électrique 210 est disposé à l'intérieur du conduit principal 212 d'alimentation en air comprimé. Le système de raccordement amont et aval est représenté plus en détail à la figure 9. Ce système de raccordement comprend une tringle 220 solidaire ici de l'élément de commande 8 sur laquelle est raccordée une enveloppe 222 renfermant l'extrémité du conduit 212 d'alimentation en air comprimé à l'intérieur duquel est passé le câble électrique 210. Le conduit 212 d'alimentation en air comprimé est un conduit en matière plastique à faible friction (à glissage aisé), par exemple en polyéthylène haute densité, qui se termine par un raccord 224 auquel est soudée une pièce creuse comportant plusieurs sorties, ici trois respectivement 226, 228, 230 pour alimenter les moyens d'actionnement 200, 202 et 204. A la suite de la pièce soudée 226 sont disposées des pièces 232, 234 de restriction de la section, se terminant par une presse-étoupe 236 comportant un orifice de passage du câble électrique 210. Le conduit d'alimentation en air comprimé 212 est avantageusement protégé et renforcé par la présence de manchons 240 qui sont par exemple en polyéthylène haute densité.

On comprend ainsi que lors du déplacement de l'appareil selon l'invention, celui-ci tracte le conduit d'alimentation en air comprimé 212 et simultanément le câble électrique 210 depuis l'extérieur de la canalisation 1. Le conduit d'alimentation 212 est avantageusement enroulé sur une bobine d'utilisation courante, pour les tubes plastiques de grande longueur, montée sur un axe et des supports spécialement équipés d'un côté d'un collecteur électrique et de l'autre d'un joint rotatif pour l'alimentation en air comprimé. A l'intérieur de cette bobine est avantageusement prévu un support du coffret de commande et de programmation. Un des flasques de la bobine est percé de trous également espacés pour réaliser, grâce à un dispositif détecteur de l'arrêt de rotation de la bobine, comme par exemple une cellule photo-électrique, l'arrêt de l'alimentation électrique puisque l'arrêt de la bobine est consécutif à l'arrêt de déplacement de l'appareil selon l'invention résultant de la présence d'un obstacle infranchissable à l'intérieur de la canalisation 1.

Le fonctionnement de l'appareil selon l'invention, selon le mode de réalisation représenté à la figure 1, est le suivant:

a. On provoque tout d'abord le blocage de l'élément bloqueur aval 6 par déploiement des bras 12 par actionnement des vérins 100 (figure 2) alimentés en air comprimé par le moyen d'actionnement 200.

b. On provoque l'extension du piston 166 de l'élément de déplacement 4 ce qui provoque le poussage de la partie en amont de l'appareil, c'est-à-dire ici de l'élément bloqueur amont 2, qui est à l'état non bloqué.

c. On provoque ensuite le blocage de l'élément bloqueur amont 2 par actionnement des moyens de blocage 10 à l'aide du moyen d'actionnement 204.

d. Après, on provoque le déblocage de l'élément bloqueur aval 6 en provoquant ainsi le repliage des bras 12.

e. Alors, on provoque le retrait du piston 166 du vérin 160 formant l'élément de déplacement 4 ce qui aboutit à une traction du corps 162 du vérin 160 et de ce fait à une traction de l'élément bloqueur aval 6, de l'élément de commande 8 et, par conséquent de toute remorque ou tube attelée à cet ensemble d'éléments. Cette traction a également provoqué le déroulement d'une partie du tuyau d'alimentation 212 contenant le câble 210.

On recommence indéfiniment cette séquence d'opérations qui est donc aisément programmable et automatisable. A cette fin, la centrale de commande comprend des moyens de commande automatique des divers éléments de l'appareil.

On peut en outre constater que par séquence l'appareil se déplace d'une longueur correspondant à la longueur de poussée du piston 166 relativement au corps 162 du vérin 160. D'autre part, pour un fonctionnement correct on a en permanence un bloqueur à l'état bloqué (ici bloqueur 2 ou bloqueur 6).

On voit également que la force de traction dépend des caractéristiques du vérin 160. On peut donc modifier cette force de traction en modifiant les caractéristiques du vérin et ceci est aisé puisque les éléments sont indépendants les uns des autres et sont reliés entre eux de manière interchangeable.

On peut également accroître de manière considérable la force de traction de l'appareil selon l'invention par exemple par l'adjonction aux éléments représentés à la figure 1 des éléments complémentaires représentés à la figure 10.

Ainsi, en référence à la figure 10, l'appareil selon l'invention comprend, à la suite de l'élément de commande 9 de la figure 1, un élément indépendant 300, formant un élément complémentaire de déplacement, de préférence constitué par un vérin hydraulique 302, avantageusement à double effet par une double alimentation en fluide hydraulique de part et d'autre du piston 304 du vérin 302 à l'aide de conduits d'alimentation symbolisés en 306 et 308. Naturellement, le piston 304 du vérin 302 est relié à l'élingue 16 de jonction avec l'élément précédent 8 tandis que le corps 310 du vérin 302 est relié à l'élingue 16 formant une articulation 14 avec l'élément suivant ou de jonction avec un moyen centreur 22 situé en fin d'appareil. De préférence, comme représenté, à la suite de l'élément complémentaire de déplacement 300, formé de préférence par un vérin hydraulique, on dispose un autre élément indépendant 320 multiplicateur de pression, qui est de préférence, comme représenté, à interface pneumatique-hydraulique de manière à fournir une force de poussage considérable du piston 304 du vérin 302 formant l'élément complémentaire de déplacement 300. Ainsi, cet élément multiplicateur de pression 320 comprend un corps 322 divisé en deux compartiments 324, 326 par une cloison transversale 328 comportant un orifice central 330 traversé par la tige 332 d'un piston 334. Le compartiment 326 est alimenté en fluide hydraulique par la conduite d'alimentation 336 de préférence à partir d'un réservoir de fluide hydraulique 338 formant encore un élément indépendant à la suite de l'élément 320 multiplicateur de pression. Le compartiment 326 comporte également un conduit 340 de sortie de fluide hydraulique relié à encore un élément complémentaire 350 de support d'un dispositif distributeur hydraulique 352 à commande électrique 354 depuis le câble électrique 210. Ce conduit 340 est connecté alternativement au conduit 306 d'alimentation en fluide hydraulique du premier effet du vérin 302 ou à l'élément formant réservoir hydraulique 338. De même, le conduit 308 de second effet du vérin 302 aboutit au système distributeur hydraulique 350 de manière à former un circuit fermé avec l'élément formant réservoir hydraulique 338. Naturellement, des vannes à voie unique telle que 356, 358 peuvent être disposées sur divers conduits. Ainsi, le système 350 distributeur hydraulique fait en fait partie d'un élément de commande 360 complémentaire qui comprend avantageusement un système 362 distributeur d'air comprimé alimenté en air comprimé par un conduit 364 relié au conduit 212 et transmettant de l'air comprimé dans le compartiment 324 de l'élément multiplicateur de pression en arrière du piston 334. Le piston 334 est rappelé par un moyen de rappel 366 tel qu'un ressort. Le dispositif 362 comprend également une commande électrique 368.

Avec cette suite d'éléments complémentaires en combinaison avec les éléments précédents faisant l'objet de la figure 1, on obtient un appareil à déplacement autonome ayant une force de traction très importante d'au moins trois tonnes avec une distance de déplacement pouvant aller jusqu'à et même dépasser, deux kilomètres, ce qui dépasse largement toutes les applications envisageables de ce type d'appareil.

Dans ce cas, le fonctionnement est le suivant:

a. On provoque d'abord le blocage de l'élément bloqueur amont 2.

b. Ensuite on provoque le déblocage de l'élément bloqueur 6.

c. On provoque ensuite simultanément l'extension du piston hydraulique 304 de l'élément de déplacement complémentaire 300 et le retrait du piston 166 de l'élément de commande 4, qui est ici pneumatique.

d. On provoque ensuite le blocage de l'élément bloqueur aval 6.

e. Ensuite, on provoque le retrait du piston hydraulique 304 de l'élément de déplacement complémentaire 300, ce qui provoque une traction de la partie arrière de l'appareil.

f. On débloque alors l'élément bloqueur amont 2.

g. On provoque l'extension du piston 166 pneumatique de l'élément de déplacement 4, ce qui résulte en un poussage de la partie de l'appareil en amont de l'élément bloqueur 6.

On répète cette séquence d'opérations indéfiniment en commençant donc par le blocage de l'élément bloqueur amont 2. Ainsi, la centrale de commande comprend des moyens programmés de commande automatique des divers éléments de l'appareil.

On comprend donc que le fonctionnement de l'appareil selon l'invention se prête aisément à une programmation et donc à une automatisation complète, ce qui rend cet appareil entièrement autonome et permet un travail la nuit ou en fin de semaine.

D'autre part, comme mentionné précédemment, on obtient avec cet appareil des forces de tractions très importantes sur de longues distances tandis que cet appareil est aisément miniaturisable et peut se déplacer sur des longueurs très importantes. D'autre part, comme indiqué précédemment, il peut se déplacer aisément à l'intérieur de canalisations fortement polluées et comportant des corps étrangers solides, ainsi que des dépôts visqueux ou collants comme par exemple du goudron pouvant entraîner un frottement supplémentaire atteignant au moins 500 kilos, ce qui est tout à fait remarquable et constitue un résultat tout à fait inattendu pour un homme de métier. Egalement, cet appareil peut franchir des courbes.

Il est à noter un avantage important de l'appareil selon l'invention résultant du fait que les éléments bloqueurs s'arc-boutent sur le paroi interne 1a de la canalisation 1. On obtient ainsi une adaptation de la force d'appui et donc de réaction sur la paroi de la canalisation 1 en fonction de la force de traction.

D'autre part, l'appareil selon l'invention ne peut en aucun cas tourner dans la canalisation ou se renverser, notamment par la présence de dispositif anti-giratoire sur tous les points susceptibles de tourner, par exemple, sur l'élément de déplacement 4 (dispositif anti-giratoire 172) ou sur le raccord d'alimentation de la figure 9 (dispositif anti-giratoire 242), etc...

## Revendications

1. Appareil à déplacement autonome dans une canalisation (1) permettant notamment l'exploration et/ou le traitement à distance de cette canalisation, et du type comprenant une pluralité d'éléments (2, 4, 6, 8) attelés entre eux pour former un train apte à franchir les courbes et dont chaque élément a une fonction précise, au moins l'un des éléments formant un élément de déplacement (4) du train, et au moins un autre desdits éléments formant un élément de commande (8) de l'élément de déplacement (4), caractérisé en ce que l'élément de déplacement (4), fonctionnant par tractage ou poussage, est constitué par un vérin (160) comprenant un corps (162) relié à un élément bloqueur (6) et un piston (166) relié à un autre élément bloqueur (2), au moins l'un (6) des deux éléments bloqueurs (2, 6), disposés respectivement en amont et en aval de l'élément de déplacement (4) et actionnés de façon alternative par l'élément de commande (8), comprenant un corps (80) muni à sa périphérie de plusieurs bras rigides (12) de longueur réglable et à mouvement indépendant, lesquels bras sont montés articulés par une extrémité (12a) sur le corps (80) et comportent à leur extrémité libre des patins (106) de blocage, de manière à être déplaçables entre une position repliée de repos sensiblement parallèle au corps (80) de l'élément bloqueur (6) et une position déployée de blocage pour laquelle les patins de blocage (106) prennent appui sélectivement contre la paroi interne (1a) de la canalisation (1) pour pouvoir résister à des efforts de traction élevés.

2. Appareil selon la revendication 1, caractérisé en ce que l'élément bloqueur (6) comprend des vérins (100) rigides et à faible course, de pivotement des bras (12) dans le plan perpendiculaire à l'axe de la canalisation (1).

3. Appareil selon la revendication 1, caractérisé en ce qu'au moins l'autre élément bloqueur (2) comprend un corps (110) pourvu à sa périphérie d'une pluralité de vérins souples (112) indépendants, radialement saillant en direction de la paroi interne (1a) de la canalisation (1) et dont l'extrémité libre est pourvue de moyens blocage (114) constitués par des patins de blocage.

4. Appareil selon la revendication 1, caractérisé en ce qu'au moins l'autre élément bloqueur comprend un ballon (130) gonflable, qui à l'état non gonflé présente un diamètre externe inférieur au diamètre de la canalisation (1) et à l'état gonflé vient en contact direct avec la paroi interne (1a) de la canalisation (1).

5. Appareil selon la revendication 4, caractérisé en ce que le ballon gonflable (130) est pourvu à l'intérieur d'un vérin (142), rigide, d'étirage du ballon (13) dont le corps (144) est solidaire de la paroi avant (130a) ou arrière (130b) du ballon (130) et dont le piston (146) de vérin est relié à ou solidaire de la paroi arrière (130b) ou avant (130a), respectivement, du ballon (130) de manière à étirer axialement le ballon (130) en diminuant ainsi son diamètre, lequel piston (146) est pourvu d'un dispositif (148) de verrouillage du piston (146).

6. Appareil selon l'une des revendications 1 à 5, caractérisé en ce que les éléments sont attelés entre eux par des articulations souples (14) ou élingues réalisées par exemple avec du câble (16) d'acier en filins torsadés, chaque élingue étant pourvue de manchons (18, 20) sertis par emboutissage pénétrant dans des logements prévus dans les éléments à assembler.

7. Appareil selon l'une des revendications 1 à 6, caractérisé en ce qu'il comprend des moyens (22) formant appui de glissage et de centrage supportés par les articulations souples (14).

8. Appareil selon la revendication 7, caractérisé en ce que les moyens (22) formant appui de glissage et de centrage comprennent des demi-coupelles (24, 26) en élastomère ou caoutchouc, serrées entre deux flasques (28, 30; 32, 34) ouvrants, lesdites coupelles comportant des échancrures (42, 44, 46, 48) pour laisser passer des corps étrangers non fixés.

9. Appareil selon la revendication 7, caractérisé en ce que les moyens (22) formant appui de glissage et de centrage comprennent des traîneaux (60) sensiblement tubulaires.

10. Appareil selon l'une des revendications 1 à 9, caractérisé en ce que l'élément de déplacement tracteur ou pousseur (4) est pourvu d'un système anti-giratoire (172).

11. Appareil selon l'une des revendications 1 à 10, caractérisé en ce qu'il comprend un élément de déplacement complémentaire indépendant (300), formé par un vérin hydraulique, et disposé en aval des éléments précédents et en particulier de l'élément de déplacement précédent (4).

12. Appareil selon la revendication 11, caractérisé en ce qu'il comprend, à la suite de l'élément de déplacement complémentaire (300), un élément multiplicateur de pression (320) du type pneumatique/hydraulique et dans ce cas cet élément (320) est suivi d'un élément formant réservoir hydraulique (338), tandis qu'un élément de commande (360) de ces éléments complémentaires est prévu.

13. Appareil selon l'une des revendications 1 à 12, caractérisé en ce que chaque élément de commande est le dernier élément de chaque série d'éléments qu'il commande et comprend des moyens d'actionnement (200, 202, 204, 206; 350, 354 et 362, 368) de chaque autre élément (2, 4, 6; 300, 320, 338) qu'il commande, lesdits moyens d'actionnement recevant des ordres d'actionnement transmis par un câble électrique (210) relié à une centrale de commande disposée à l'extérieur de la canalisation (1).

14. Appareil selon la revendication 13, caractérisé en ce que le câble électrique est disposé à l'intérieur du conduit (212) d'air comprimé alimentant les divers éléments fonctionnant pneumatiquement (2, 4, 6, 320).

15. Appareil selon la revendication 13 ou 14, caractérisé en ce que la centrale de commande comprend des moyens programmés de commande automatique des divers éléments constituant l'appareil.

**Patentansprüche**

1. Vorrichtung mit unabhängiger Versetzung in einer Leitung (1), die insbesondere die Fernuntersuchung und/oder Fernbehandlung dieser Leitung ermöglicht, der Gattung, die eine Mehrzahl von miteinander gekoppelten Elementen (2, 4, 6, 8) aufweist zur Bildung eines Zugs, der dazu fähig ist, die Kurven zu durchfahren, und von der jedes Element eine bestimmte Funktion aufweist, wobei wenigstens eines der Elemente ein Element (4) zur Versetzung des Zugs und wenigstens ein anderes der besagten Elemente ein Element (8) zur Steuerung des Versetzungselements (4) bildet, dadurch gekennzeichnet, daß das Versetzungselement (4), das durch Ziehen oder Schieben arbeitet, aus einem Zylinder (160) besteht, der ein mit einem Blockierungselement (6) verbundenes Gehäuse (162) und einen mit einem anderen Blockierungselement (2) verbundenen Kolben (166) aufweist, wobei wenigstens eines (6) der beiden Blockierungselemente (2, 6), die oberhalb bzw. unterhalb des Versetzungselements (4) angeordnet sind und die vom Steuerungselement (8) wechselweise betätigt werden, einen Körper (80) aufweist, der an seinem Umfang mit mehreren starren Armen (12) versehen ist, deren Länge regelbar und deren Bewegung unabhängig ist, welche Arme durch ein Ende (12a) mit dem Körper (80) gelenkig verbunden sind und an ihrem freien Ende Blockierungsschuhe (106) aufweisen, so daß sie zwischen einer gefalteten, zum Körper (80) des Blockierungselements (6) im wesentlichen parallelen Ruhestellung und einer entfalteten Blockierungsstellung bewegbar sind, wobei in der Blockierungsstellung die Blockierungsschuhe (106) sich selektiv auf der inneren Wand (1a) der Leitung (1) stützen, damit sie hohen Zugbeanspruchungen widerstehen können.

2. Vorrichtung nach Anspruch 1, dadurch gekennzeichnet, daß das Blockierungselement (6) starre Zylinder (100) mit einem kleinen Hub aufweist zum Schwenken der Arme (12) in der zur Achse der Leitung (1) senkrechten Ebene.

3. Vorrichtung nach Anspruch 1, dadurch gekennzeichnet, daß wenigstens das andere Blockierungselement (2) einen Körper (110) aufweist, der an seinem Umfang mit einer Mehrzahl von unabhängigen unstarren Zylindern (112) versehen ist, die in Richtung der inneren Wand (1a) der Leitung (1) radial vorspringen und deren freies Ende mit aus Blockierungsschuhen bestehenden Blockierungsmitteln (114) versehen ist.

4. Vorrichtung nach Anspruch 1, dadurch gekennzeichnet, daß wenigstens das andere Blockierungselement einen aufblasbaren Ballon (130) aufweist, der im nicht aufgeblasenen Zustand einen kleineren äußeren Durchmesser als der Durchmesser der Leitung (1) aufweist und der im aufgeblasenen Zustand in direkten Kontakt mit der inneren Wand (1a) der Leitung (1) kommt.

5. Vorrichtung nach Anspruch 4, dadurch gekennzeichnet, daß der aufblasbare Ballon (130) innen mit einem starren Zylinder (142) zum Ziehen des Ballons (130) versehen ist, dessen Gehäuse (144) mit der Vorder- (130a) oder Rückwand (130b) des Ballons (130) einstückig ist und dessen Zylinderkolben (146) mit der Rück- (130b) bzw. Vorderwand (130a) des Ballons (130) verbunden oder einstückig ist, zum Axialziehen des Ballons (130) und damit zur Verminderung dessen Durchmessers, welcher Kolben (146) mit einer Vorrichtung (148) zur Verriegelung des Kolbens (146) versehen ist.

6. Vorrichtung nach einem der Ansprüche 1 bis 5, dadurch gekennzeichnet, daß die Elemente durch unstarre, z.B. aus einem aus verwundenem Trossenstahlseil (16) gebildeten Gelenk (14) oder Schlingen miteinander gekoppelt sind, wobei jede Schlinge mit durch Tiefung gefalzte Hülsen (18, 20) versehen ist, die in die in den zusammenzustellenden Elementen vorgesehenen Aufnahmen gelangen.

7. Vorrichtung nach einem der Ansprüche 1 bis 6, dadurch gekennzeichnet, daß sie von den unstarren Gelenken (14) getragene, Gleit- und Zentrierstütze bildende Mittel (22) aufweist.

8. Vorrichtung nach Anspruch 7, dadurch gekennzeichnet, daß die die Gleit- und Zentrierstütze bildenden Mittel (22) Halbschalen (24, 26) aus Elastomer oder Gummi aufweisen, die zwischen zwei offenen Flanschen (28, 30; 32, 34) geklemmt sind und die bogenförmige Ausschnitte (42, 44, 46, 48) aufweisen zum Durchgang der nicht gebundenen Fremdkörper.

9. Vorrichtung nach Anspruch 7, dadurch gekennzeichnet, daß die die Gleit- und Zentrierstütze bildenden Mittel (22) im wesentlichen rohrförmige Schleifen (60) aufweisen.

10. Vorrichtung nach einem der Ansprüche 1 bis 9, dadurch gekennzeichnet, daß das Versetzungselement (4) durch Ziehen oder Schieben mit einem drehungsverhindernden System (172) versehen ist.

11. Vorrichtung nach einem der Ansprüche 1 bis 10, dadurch gekennzeichnet, daß sie ein zusätzliches unabhängiges Versetzungselement (300) aufweist, das aus einem hydraulischen Zylinder besteht und das unterhalb der vorangehenden Elemente und insbesondere des vorangehenden Versetzungselements (4) angeordnet ist.

12. Vorrichtung nach Anspruch 11, dadurch gekennzeichnet, daß sie unterhalb des zusätzlichen Versetzungselements (300) einen Druckverstärker (320) vom pneumatisch/hydraulischen Typ aufweist und daß in diesem Fall ein einen hydraulischen Tank bildendes Element (338) diesem Element (320) nachfolgt, wobei ein Element (360) zur Steuerung dieser zusätzlichen Elemente vorgesehen ist.

13. Vorrichtung nach einem der Ansprüche 1 bis 12, dadurch gekennzeichnet, daß jedes Steuerelement das letzte Element jeder von ihm gesteuerten Elementenfolge ist und Mittel (200, 202, 204, 206; 350, 354 und 362, 368) zur Betätigung von jedem anderen von ihm gesteuerten Element (2, 4, 6; 300, 320, 338) aufweist, wobei die besagten Betätigungsmittel Betätigungsbefehle empfangen, die durch ein mit einer außerhalb der Leitung (1) angeordneten Steuerungseinheit verbundenes elektrisches Kabel (210) übertragen werden.

14. Vorrichtung nach Anspruch 13, dadurch gekennzeichnet, daß das elektrische Kabel sich in der Druckluftleitung (212) befindet, die die verschiedenen pneumatisch arbeitenden Elemente (2, 4, 6, 320) speist.

15. Vorrichtung nach Anspruch 13 oder 14, dadurch gekennzeichnet, daß die Steuerungseinheit programmierte Mittel zur automatischen Steuerung der verschiedenen die Vorrichtung bildenden Elemente aufweist.

**Claims**

1. Apparatus capable of moving in an autonomous manner inside a pipe (1) permitting in particular the remote exploration and/or treatment of this pipe, and of the type comprising a plurality of elements (2, 4, 6, 8) coupled with one another to form a train capable of passing through bends and each element of which has a precise function, at least one of the elements forming a train displacement element (4), and at least another of the said elements forming an element for the control (8) of the displacement element (4), characterized in that the displacement element (4), which works through pulling or through pushing, is formed of a cylinder (160) comprising a body (162) connected to a locking element (6) and a piston (166) connected to another locking element (2), at least one (6) of the two locking elements (2, 6), disposed respectively upstream and downstream of the displacement element (4) and actuated alternately by the control element (8), comprising a body (80) provided on its periphery with several rigid arms (12) with an adjustable length and capable of moving in an independent manner, which arms are hinged at one end (12a) to the body (80) and comprise at their free end locking shoes (106) so as to be movable between a folded rest position substantially parallel to the body (80) of locking element (6) and an unfolded locking position in which the locking shoes (106) abut selectively against the inner wall (1a) of the pipe (1) to be in a condition to support high tractive stresses.

2. Apparatus according to claim 1, characterized in that the locking element (6) comprises rigid cylinders (100) with a small stroke for the pivoting of the arms (12) in the plane perpendicular to the axis of the pipe (1).

3. Apparatus according to claim 1, characterized in that at least the other locking element (2) comprises a body (110) provided on its periphery with a plurality of independent flexible cylinders (112) projecting radially towards the inner wall (1a) of pipe (1) and whose free end is provided with locking means (114) formed of locking shoes.

4. Apparatus according to claim 1, characterized in that at least the other locking element comprises an inflatable balloon (130) which, in the non-inflated state, presents an inner diameter smaller than the diameter of pipe (1) and which, in the inflated state, comes in direct contact with the inner wall (1a) of pipe (1).

5. Apparatus according to claim 4, characterized in that the inflatable balloon (130) is provided in the inside with a rigid cylinder (142) for stretching the balloon (13), whose body (144) is solid with the front wall (130a) or the rear wall (130b) of balloon (130) and whose cylinder piston (146) is connected to or solid with the rear (130b) or front (130a) wall, respectively, of balloon (130) so as to axially stretch the balloon (130) thus lowering its diameter, which piston (146) is provided with a device (148) for locking the piston (146).

6. Apparatus according to one of claims 1 to 5, characterized in that the elements are coupled between one another with flexible joints (14) or slings made for example with steel cable (16) of twisted ropes, each sling being provided with sleeves (18, 20) crimped through embossing entering receptacles provided in the elements to be assembled.

7. Apparatus according to one of claims 1 to 6, characterized in that it comprises sliding and centering bearing-forming means (22) supported by the flexible joints (14).

8. Apparatus according to claim 7, characterized in that the sliding and centering bearing-forming means (22) comprise elastomeric or rubber half-dishes (24, 26) clamped between two opening flanges (28, 30; 32, 34), which dishes comprise notches (42, 44, 46, 48) allowing the non-fixed foreign matter to pass.

9. Apparatus according to claim 7, characterized in that the sliding and centering bearing-forming means (22) comprise substantially tubular sledges (60).

10. Apparatus according to one of claims 1 to 9, characterized in that the pulling or pushing displacement element (4) is provided with a non-twisting system (172).

11. Apparatus according to one of claims 1 to 10, characterized in that it comprises an independent additional displacement element (300) formed of a hydraulic cylinder, and disposed downstream of the preceding elements and in particular of the preceding displacement element (4).

12. Apparatus according to claim 11, characterized in that it comprises, following the additional displacement element (300), a pressure intensifying element (320) of the pneumatic/hydraulic type and, in this case, this element (320) is followed by a hydraulic reservoir-forming element (338), whereas an element (360) for controlling these additional elements is provided.

13. Apparatus according to one of claims 1 to 12, characterized in that each control element is the last element of each series of elements which it controls and comprises means (200, 202, 204, 206; 350, 354 and 362, 368) for actuating each other element (2, 4, 6; 300, 320, 338) it controls, the said actuating means receiving actuation instructions transmitted by an electric wire (210) connected to a control unit arranged outside the pipe (1).

14. Apparatus according to claim 13, characterized in that the electric wire is arranged inside the compressed air duct (212) feeding the various pneumatic elements (2, 4, 6, 320).

15. Apparatus according to claim 13 or 14, characterized in that the control unit comprises programmed means for the automatic control of the various elements forming the apparatus.

Fig. 1

Fig. 4

Fig. 5

Fig.10

Fig.2

_Fig. 9_

_Fig. 3_

Fig.6

Fig.7a

Fig.7b

Fig.11

Fig.12